# EUROPÄISCHE PATENTSCHRIFT

(11) **EP 0 856 353 B1**
(45) Veröffentlichungstag und Bekanntmachung des Hinweises auf die Patenterteilung: **15.05.2002**
(21) Anmeldenummer: 97810043.6
(22) Anmeldetag: 29.01.1997
(51) Int. Cl.: B01F 5/06

(54) **Modul zu einer statischen Mischeinrichtung für ein verweilzeitkritisches, plastisch fliessfähiges Mischgut**
Module for a static mixer for a resident time critical plastic flowable mixture
Module d'un mélangeur statique pour une mélange plastique et fluide à temps de séjour critique

(43) Veröffentlichungstag der Anmeldung: 05.08.1998
(73) Patentinhaber: Sulzer Chemtech AG, 8404 Winterthur (CH)
(72) Erfinder: Maurer, Rudolf, 8404 Winterthur (CG); Studlek, Joachim, 35614 Asslar (DE)
(74) Vertreter: Sulzer Management AG

(56) Entgegenhaltungen:
- EP-A- 0 154 013
- CH-A- 678 284
- DD-A- 254 337
- US-A- 4 049 241

## Beschreibung

Die Erfindung betrifft einen Modul zu einer statischen Mischeinrichtung für ein verweilzeitkritisches, plastisch fliessfähiges Mischgut gemäss Oberbegriff von Anspruch 1. Die Erfindung bezieht sich auch auf eine entsprechende Mischeinrichtung und Verwendungen der Einrichtung.

Bei der Herstellung von geformten Teilen aus Hart-PVC wird granulat- und/oder pulverförmiges PVC mit Gleitmitteln, Stabilisatoren und anderen Additiven vermischt und das Gemenge anschliessend in Extrudern zu einer verarbeitbaren Masse weiterbehandelt. Dabei wird das Gemisch erwärmt und auf einen geeigneten Arbeitsdruck komprimiert. Mit Vorteil werden Zweischneckenextruder verwendet. Allerdings ist das dabei erzeugte Zwischenprodukt in einem Zustand, der für die Herstellung der Formteile noch zu wenig homogen ist. Daher werden in vielen Anlagen statische Mischer zwischen Extrudern und Formwerkzeugen angeordnet. In diesen Mischern wird das Gemenge homogenisiert und zwar - zur Schonung der PVC-Polymere - bei geringen Schergeschwindigkeiten.

PVC ist ein Thermoplast, der ab 160°C verarbeitbar ist. Er ist jedoch thermisch nicht stabil, da er bereits bei 140°C Chlorwasserstoff abspaltet. Bei der Herstellung von Fensterprofilen aus Hart-PVC wird der Kunststoff bei Temperaturen zwischen 190 und 200°C verarbeitet. Bei diesen Temperaturen ist die Verweilzeit im statischen Mischer ziemlich kritisch. Die Verweilzeit kann an besonderen Stellen innerhalb des statischen Mischers so lange ausfallen, dass Verfärbungen und Qualitätsverluste entstehen. Sobald sich solche ungünstigen Erscheinung einstellen, verstärken sich diese sehr schnell, so dass der Herstellprozess unterbrochen werden muss. Vor einer Fortsetzung des Prozesses müssen die statischen Mischer werden.

Es ist Aufgabe der Erfindung, eine zum Beispiel aus dem Patentschrift CH-A-678 284 gemäß dem einleitenden Teil des Anspruchs 1 bekannte statische Mischer derart weiter zu bilden, dass hinsichtlich der Verweilzeit günstigere Verhältnisse vorliegen und dass eine Reinigung des statischen Mischers einfach durchführbar ist. Diese Aufgabe wird durch einen statischen Mischer gelöst, der eine modulare Mischerstruktur aufweist und dessen Module durch die Merkmale des Anspruchs 1 definiert sind.

Der Modul ist Teil einer statischen Mischeinrichtung, die für ein verweilzeitkritisches, plastisch fliessfähiges Mischgut vorgesehen ist. Die Einrichtung umfasst ein rohrartiges Gehäuse, in dem Stege angeordnet sind. Die Stege sind gegen die Längsachse des Gehäuses geneigt; sie kreuzen sich im wesentlichen auf einer geraden Linie senkrecht zur Längsachse. Der Modul umfasst eine in das Gehäuse einschiebbare Hülse. Die das Mischgut leitende Innenwand der Einrichtung ist durch Hülseninnenseiten gebildet. Die Stege sind dornartig ausgebildet, mit jeweils einem gegen die Bewegungsrichtung des Mischguts weisenden Scheitel und einer an der Hülseninnenseite befestigten Basis. Jeder Scheitel bildet gegenüber der Innenwand der Einrichtung einen Zwischenraum.

Der erfindungsgemässe Modul bzw. eine mit derartigen Modulen zusammengebaute Mischeinrichtung ist auch für die Bearbeitung von Kautschuk oder einer anderen plastisch fliessfähigen Masse eines verweilzeitkritischen Polymers verwendbar.

Die abhängigen Ansprüche 2 bis 6 beziehen sich auf vorteilhafte Ausführungsformen des erfindungsgemässen Moduls. Gegenstände der unabhängigen Ansprüche 7, 9 und 10 sind die Mischeinrichtung, eine Anlage mit dieser Einrichtung und die Verwendung der Einrichtung. Der abhängige Anspruch 8 betrifft eine Einrichtung, deren Module besonders gut reinigbar sind.

Nachfolgend wird die Erfindung anhand der Zeichnungen erläutert. Es zeigen:
- Fig. 1: eine schematische Darstellung einer Anlage zur Herstellung von Formteilen aus Hart-PVC,
- Fig. 2: ausschnittsweise eine Mischeinrichtung mit erfindungsgemässen Modulen,
- Fig. 3: eine Darstellung zur Geometrie der Stege des erfindungsgemässen Moduls,
- Fig. 4: einen Längsschnitt durch einen erfindungsgemässen Modul und
- Fig. 5: die Fliessverhältnisse des Mischguts um einen besonders ausgebildeten Steg.

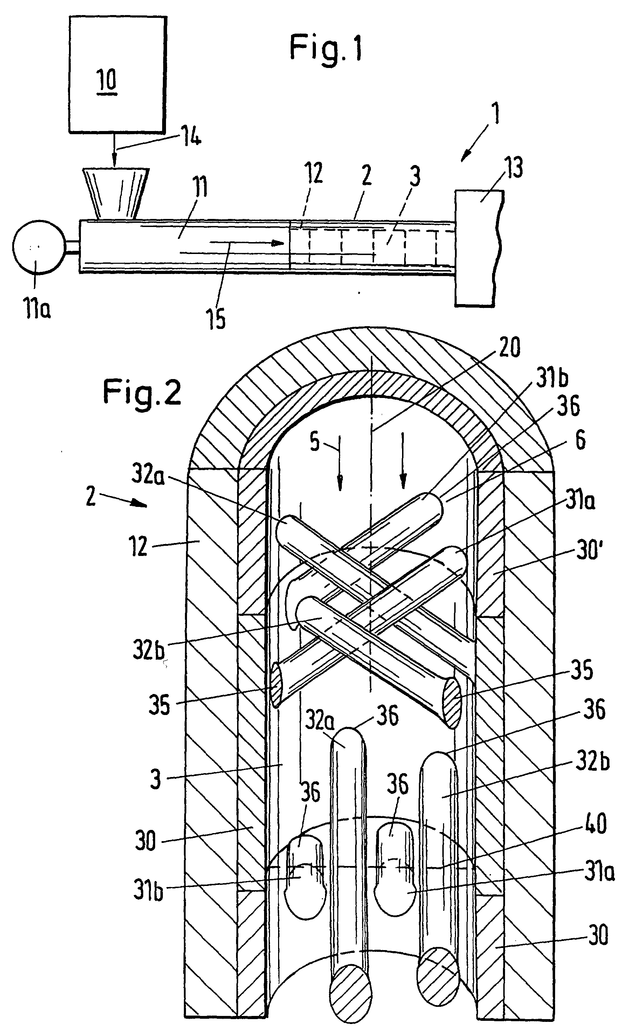

Die Anlage 1 in Fig. 1 umfasst einen Schneckenextruder 11 (Antrieb 11a) und ein stromabwärts liegendes Formwerkzeug 13, wobei eine Mischeinrichtung 2 dem Extruder 11 nachgeschaltet ist. Dem Extruder 11 vorgelagert ist eine Teilanlage 10, in der das eingangs genannte Gemenge 14 aus PVC-Partikeln, Gleitmitteln, Stabilisatoren und anderen Additiven erzeugt wird. Im Extruder 11 wird das Gemenge 14 durch Erwärmen und Komprimieren zu einer Masse 15 umgeformt, die anschliessend in der Mischeinrichtung 2 mit erfindungsgemässen, in einem Gehäuse 12 angeordneten Modulen 3 homogenisiert wird. Das homogeniserte Mischgut 16 wird im Formwerkzeug 13 zu Produkten wie beispielsweise Fensterprofilen geformt.

Fig. 2 zeigt einen Teil des längsgeschnittenen Gehäuses 12 der Mischeinrichtung 2 mit entsprechend geschnittenen Hülsen 30, 30' von erfindungsgemässen Modulen 3. Die Stege 31a, 31b, 32a und 32b sind vollständig gezeichnet; sie befinden sich teilweise vor der Schnittebene. Die Stege sind dornartig ausgebildet und zwar mit jeweils einem gegen die Bewegungsrichtung 5 des Mischguts weisenden Scheitel 36 und einer an der Hülseninnenseite befestigten Basis 35. Jeder Scheitel bildet gegenüber der Innenwand der Einrichtung 2 einen Zwischenraum 6.

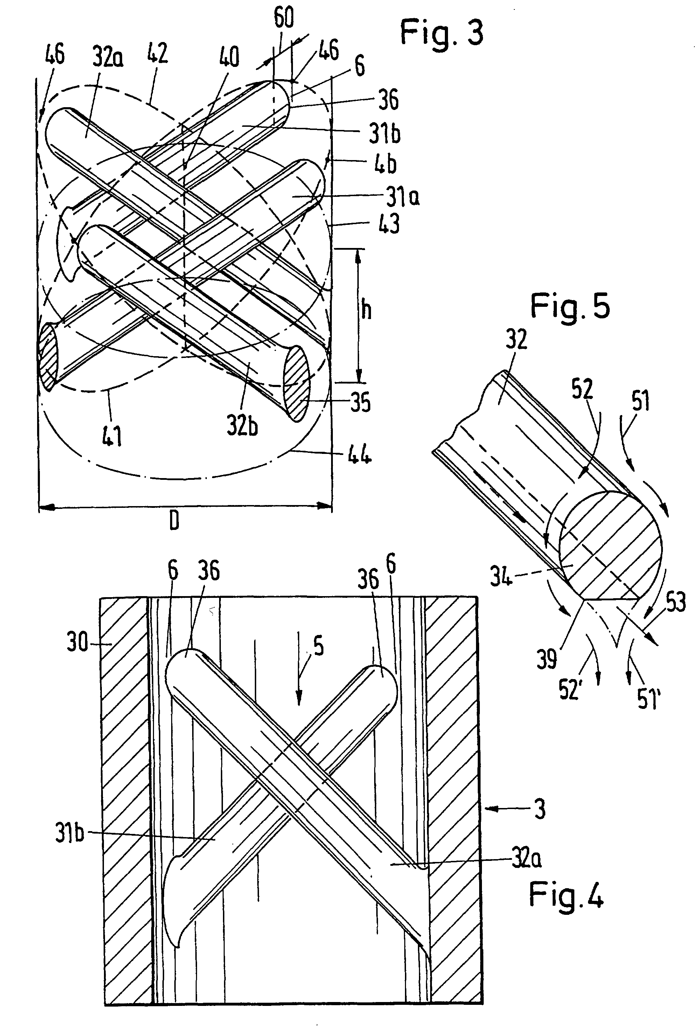

Der mittlere Modul 3 zeigt seinen Aufbau vollständig; bei den benachbarten Modulen sind nur der untere bzw. der obere Teil dargestellt. Das oben liegende Hülsenstück 30' kann der untere Teil eines Moduls sein oder aber auch eine Hülse, die keine mischwirksamen Stege enthält. Die Geometrie des mittleren Moduls 3 wird anhand der Fig.3 näher erläutert:

Die Stege 31a, 31b, 32a und 32b liegen auf zwei sich kreuzenden Ellipsen 41 und 42. Die Kreuzungslinie 40 steht senkrecht zur Längsachse 20 des Gehäuses 12 (siehe Fig.2). Die Mittellinien der Stege (nicht dargestellt) schneiden die Ellipsen in Punkten 46. Zwischen diesen Punkten 46 und den Stegscheiteln 36 befinden sich erfindungsgemäss Zwischenräume 6 mit jeweils einer minimalen Breite 60. An der Basis 35 sind die Stege auf einem zylindrischen Umfang der Hülse 30 - zwischen den Kreisen 43 und 44 - befestigt. Die Höhe h dieses Umfangs ist kleiner als rund die Hälfte des Innendurchmessers D der Hülse 30.

Dank der Zwischenräume 6 bei den Stegscheiteln 36 bilden sich an diesen Stellen keine stagnierenden Ansammlungen von Mischgut aus. Dadurch ergibt sich eine wesentliche Verbesserung der Produktequalität. Die minimale Breite der Zwischenräume 6 in radialer Richtung gemessen muss jeweils grösser als rund 2 mm sein. Diese Breite sollte nicht grösser als rund 6 mm gewählt werden, da sonst die Mischwirkung zu stark beeinträchtigt würde.

An der Basis 35 der Stege sind für die Verbindungszone zu der Innenfläche der Hülse 30 gleichmässig ausgebildete Rundungen vorgesehen, die ein günstiges Fliessverhalten des Mischguts bewirken.

Anders als in Fig.2 dargestellt können sich benachbarte Stege berühren. In diesem Fall können sie entlang der Kreuzungslinie 40 miteinander verbunden, mit Vorteil zusammengeschweisst sein. Durch die Verbindung wird die aus den Stegen gebildete Struktur verstärkt, so dass diese den Druckkräften des Mischguts besser standhält.

Die Kreuzungslinien 40 der Stege benachbarter Module 3 sind quer zueinander gerichtet; sie sind insbesondere - wie in Fig.2 gezeigt - um 90° gegeneinander gedreht. Diese Anordnung der Stege ergibt eine gute Mischwirkung.

Damit die Verweilzeiten des Mischgutes an allen Stellen des Mischbereichs weitgehend gleich gross sind, sieht man für die Stege Querschnitte vor, die im wesentlichen kreisförmig oder auch elliptisch sind. Bei einem elliptischen Querschnitt soll dessen grösster Durchmesser senkrecht zur Längsachse 20 des Gehäuses 12 stehen, und er soll nicht wesentlich grösser als der kleinste Durchmesser sein.

Fig.4 zeigt einen Längsschnitt durch einen Modul 3, dessen Stege 31b und 32a - es sind hier nur die hinter der Schnittebene liegenden gezeichnet - vollständig innerhalb der Hülse 30 angeordnet sind. Bei den Modulen 3 der Fig.2 stehen die Stege eines Moduls aus ihrer Hülse 30 heraus und ragen in einen freien Raum einer benachbarten Hülse 30 bzw. 30' hinein. Die Bauart der Fig.2 ist besonders vorteilhaft hinsichtlich einer Reinigung der Mischeinrichtung 2, die in der Regel häufig vorzunehmen ist.

Die für eine Berührung mit Mischgut bestimmten Oberflächen sind mit Vorteil beschichtet. Die Reinigung wird dadurch erleichtert, und auch das Fliessverhalten und damit der Mischvorgang werden verbessert. Diese Vorteile sind besonders deutlich ausgeprägt, wenn als Beschichtungsmaterial Titannitrit (TN) verwendet wird. Für die Beschichtung eignen sich auch keramische Materialien, insbesondere organisch modifizierte ("Ormocer": organically modified ceramics).

Die Abströmseiten und/oder die Zuströmseiten der Stege können jeweils einen Längsstreifen aufweisen, der zumindest angenähert eben ausgebildet ist. Mit solchen Längsstreifen kann beispielsweise ein ursprünglich kreisförmiger Querschnitt so geändert werden, dass er ähnlich wie ein elliptischer Querschnitt wirkt. In Fig.5 ist ein Steg 32 mit einem ebenen Längsstreifen 34 auf der Abströmseite dargestellt. Mit dieser besonderen Formgebung wird eine Verbesserung der Mischwirkung angestrebt, nämlich hinsichtlich folgendem Phänomen, auf dem der Mischvorgang in statischen Mischern teilweise beruht: Das Mischgut teilt sich am Steg 32 in zwei Teilströme 51 und 52, die sich auf der Abströmseite - Teilströme 51' und 52' - wieder annähern. Dabei wird ein dritter Teilstrom 53, der dem Steg 32 entlang fliesst, zwischen die Teilströme 51' und 52' eingebettet. Aufgrund des Streifens 34 liegen Kanten 39 auf der Stegoberfläche vor, die ein Ablösen der Teilströme 51 und 52 fördern. Dadurch ergibt sich eine Verstärkung des Querstroms 53 und somit eine verbesserte Mischwirkung.

Hinsichtlich der Auslegung der erfindungsgemässen Mischeinrichtung 2 sind noch folgende Punkte zu beachten: Bis zu einem Durchmesser D = 15 cm sind 4 Stege pro Modul 3 vorteilhaft (siehe Figuren 2 und 3). Bei grösseren Durchmessern - bis zu 25 cm - sind 6 Stege besser geeignet. Der Neigungswinkel der Stege soll rund 45° betragen. In diesem Fall wählt man die Länge des Moduls 3 gleich gross wie den Durchmesser D. Für die Anzahl der Module 3 in der Mischeinrichtung 2 sieht man mit Vorteil 4 Stück vor.

## Patentansprüche

1. Modul (3) zu einer statischen Mischeinrichtung (2) für ein verweilzeitkritisches, plastisch fliessfähiges Mischgut (15, 16), welche Einrichtung (2) ein rohrartiges Gehäuse (12) umfasst, in dem Stege (31a, 31b, 32a, 32b) angeordnet sind, die gegen die Längsachse (20) des Gehäuses geneigt sind und die sich im wesentlichen auf einer geraden Linie (40) senkrecht zur Längsachse kreuzen, wobei der Modul eine in das Gehäuse einschiebbare Hülse (30) umfasst
**dadurch gekennzeichnet, dass** die das Mischgut leitende Innenwand der Einrichtung durch Hülseninnenseiten gebildet ist, dass die Stege dornartig - mit jeweils einem gegen die Bewegungsrichtung (5) des Mischguts weisenden Scheitel (36) und einer an der Hülseninnenseite befestigten Basis (35) - ausgebildet sind und dass jeder Scheitel gegenüber der Innenwand der Einrichtung einen Zwischenraum (6) bildet.

2. Modul nach Anspruch 1, **dadurch gekennzeichnet, dass** die minimale Breite der Zwischenräume (6) bei den Stegscheiteln (36) in radialer Richtung gemessen jeweils grösser als rund 2 mm ist.

3. Modul nach Anspruch 1 oder 2, **dadurch gekennzeichnet, dass** der Stegquerschnitt im wesentlichen kreisförmig oder elliptisch ist, wobei der längste Ellipsendurchmesser senkrecht zur Längsachse (20) des Gehäuses steht und nicht wesentlich grösser als der kürzeste Ellipsendurchmesser ist.

4. Modul nach Anspruch 3, **dadurch gekennzeichnet, dass** die Abströmseiten und/oder die Zuströmseiten der Stege (32) jeweils einen Längsstreifen (34) aufweisen, der zumindest angenähert eben ausgebildet ist.

5. Modul nach einem der Ansprüche 1 bis 4, **dadurch gekennzeichnet, dass** benachbarte Stege (31a, 31b, 32a, 32b) entlang der Kreuzungslinie (40) miteinander verbunden, insbesondere verschweisst sind.

6. Modul nach einem der Ansprüche 1 bis 5, **dadurch gekennzeichnet, dass** die für eine Berührung mit Mischgut bestimmten Oberflächen beschichtet sind, wobei insbesondere als Beschichtungsmaterial Titannitrit oder ein keramisches Material vorgesehen ist.

7. Mischeinrichtung mit Modulen nach einem der Ansprüche 1 bis 6, **dadurch gekennzeichnet, dass** die Kreuzungslinien (40) der Stege (31a, 31b, 32a, 32b) zweier benachbarter Module (3) quer zueinander liegen und insbesondere um 90° gegeneinander gedreht sind.

8. Mischeinrichtung nach Anspruch 7, **dadurch gekennzeichnet, dass** die Stege (31a, 31b, 32a, 32b) eines Moduls (3) aus ihrer Hülse (30) herausstehen und in einen freien Raum einer benachbarten Hülse (30, 30') hineinragen.

9. Anlage (1) für die Verarbeitung von plastisch fliessfähigem Hart-PVC oder eines anderen verweilzeitkritischen Stoffes mit einem Schneckenextruder (11) und einem stromabwärts liegenden Formwerkzeug (13), wobei eine Mischeinrichtung (2) gemäss Anspruch 7 oder 8 zwischen Schneckenextruder und Formwerkzeug angeordnet ist.

10. Verwendung einer Mischeinrichtung (2) gemäss Anspruch 7 oder 8 zur Bearbeitung einer plastisch fliessfähigen Masse eines verweilzeitkritischen Polymers, insbesondere von Hart-PVC oder Kautschuk.

## Claims

1. Module (3) for a static mixer (2) for a plastic, flowable, composition to be mixed (15, 16), which is critical with respect to the dwell time, the apparatus (2) comprising a tubular housing (12) in which arms (31a, 31b, 32a, 32b) are arranged which are inclined with respect to the longitudinal axis (20) of the housing and which cross substantially on a straight line (40) perpendicular to the longitudinal axis, with the module including a sleeve (30) which can be pushed into the housing,
**characterised in that** the inner wall of the apparatus which conducts the composition to be mixed is formed by the inner sides of sleeves; **in that** the arms are formed in the shape of rods - each having a tip (36) directed opposite to the direction of movement (5) of the composition to be mixed and a base (35) fastened to the inner sides of the sleeve -; and **in that** each tip forms an intermediate space (6) with respect to the inner wall of the mixer.

2. Module in accordance with claim 1 **characterised in that** in each case the minimum width of the intermediate spaces (6) at the tips of the rods (36) is greater than about 2 mm when measured in the radial direction.

3. Module in accordance with claim 1 or claim 2 **characterised in that** the rod cross-section is substantially circular or elliptical, with the major diameter of the ellipse being perpendicular to the longitudinal axis (20) of the housing and not being substantially greater than the minor diameter of the ellipse.

4. Module in accordance with claim 3 **characterised in that** the downstream sides and/or the upstream sides of the rods (32) each have a longitudinal strip (34) which is made at least approximately flat.

5. Module in accordance with one of the claims 1 to 4 **characterised in that** adjacent rods (31a, 31b, 32a, 32b) are connected, in particular welded, to one another along the crossing line (40).

6. Module in accordance with one of the claims 1 to 5 **characterised in that** the surfaces intended for contact with the composition to be mixed are coated, with titanium nitrite or a ceramic material in particular being provided as a coating material.

7. Mixer with modules in accordance with one of the claims 1 to 6 **characterised in that** the crossing lines (40) of the rods (31a, 31b, 32a, 32b) of two neighbouring modules (3) are transversely disposed with respect to one another and are in particular rotated with respect to one another by 90°.

8. Mixer in accordance with one claim 7 **characterised in that** the rods (31a, 31b, 32a, 32b) of a module (3) project out of their sleeve (30) and protrude into a free space of an adjacent sleeve (30, 30').

9. Plant (1) for the processing of plastic, flowable hard PVC or of another material which is critical with respect to the dwell time, the plant comprising a screw extruder (11) and a moulding tool (13) lying downstream, with a mixer (2) in accordance with claim 7 or claim 8 being provided between the screw extruder and the moulding tool.

10. Use of a mixer (2) in accordance with claim 7 or claim 8 for the processing of a plastic, flowable, composition of a polymer which is critical with respect to the dwell time, in particular of hard PVC or rubber.

## Revendications

1. Module (3) d'un mélangeur statique (2) pour un mélange plastique et fluide à temps de séjour critique (15, 16), où le mélangeur (2) comprend un boîtier tubulaire (12) dans lequel sont disposées des baguettes (31a, 31b, 32a, 32b) qui sont inclinées contre l'axe longitudinal (20) du boîtier et qui se croisent sensiblement sur une ligne droite (40) perpendiculaire à l'axe longitudinal, où le module comprend un manchon (30) pouvant être poussé dans le boîtier, **caractérisé en ce que** la paroi intérieure du mélangeur guidant le mélange est formée par des côtés intérieurs de manchon, **en ce que** les baguettes sont réalisées en forme de pointe - avec respectivement une crête (36) orientée contre la direction de déplacement (5) du mélange et une base (35) fixée au côté intérieur du manchon, et **en ce que** chaque crête forme par rapport à la paroi intérieure de l'installation un espace intermédiaire (6).

2. Module selon la revendication 1, **caractérisé en ce que** la largeur minimale des espaces intermédiaires (6), mesurée dans les crêtes de baguette (36) dans la direction radiale, est respectivement plus grande qu'environ 2 mm.

3. Module selon la revendication 1 ou 2, **caractérisé en ce que** la section transversale de baguette est sensiblement circulaire ou elliptique, où le diamètre d'ellipse le plus long s'étend perpendiculairement à l'axe longitudinal (20) du boîtier et n'est pas sensiblement plus grand que le diamètre d'ellipse le plus court.

4. Module selon la revendication 3, **caractérisé en ce que** les côtés d'écoulement et/ou les côtés d'afflux des baguettes (32) présentent respectivement une bande longitudinale (34) qui est réalisée an moins approximativement d'une manière plane.

5. Module selon l'une des revendications 1 à 4, **caractérisé en ce que** des baguettes avoisinantes (31a, 31b, 32a, 32b) le long de la ligne de croisement (40) sont reliées les unes aux autres, notamment par soudage.

6. Module selon l'une des revendications 1 à 5, **caractérisé en ce que** les surfaces prévues pour un contact avec le mélange sont revêtues, où il est prévu notamment comme matériau de revêtement du nitrure de titane ou un matériau céramique.

7. Mélangeur comportant des modules selon l'une des revendications 1 à 6, **caractérisé en ce que** les lignes de croisement (40) des baguettes (31a, 31b, 32a, 32b) de deux modules avoisinants (3) s'étendent transversalement les unes aux autres et sont notamment tournées de 90° les unes vers les autres.

8. Mélangeur selon la revendication 7, **caractérisé en ce que** les baguettes (31a, 31b, 32a, 32b) d'un module (3) dépassent de leur manchon (30) et font saillie dans un espace libre d'un manchon avoisinant (30, 30').

9. Installation (1) pour le traitement d'un PVC dur plastique et fluide ou d'un autre matériau à temps de séjour critique avec une extrudeuse à vis (11) et un outil de moulage (13) situé en aval, où est disposé un mélangeur (2) selon la revendication 7 ou 8 entre l'extrudeuse à vis et l'outil de moulage.

10. Utilisation d'un mélangeur (2) selon la revendication 7 ou 8 pour le traitement d'une masse plastique et fluide d'un polymère à temps de séjour critique, notamment de PVC dur ou de caoutchouc.
